# NOUVEAU FASCICULE DE BREVET EUROPEEN

(11) **EP 2 501 941 B2**
(45) Date de publication et mention de la décision concernant l'opposition: **30.10.2024**
(45) Mention de la délivrance du brevet: 18.07.2018
(21) Numéro de dépôt: 10799084.8
(22) Date de dépôt: 19.11.2010
(51) Int. Cl.: F04D 29/56, F01D 17/16

(54) **TURBOMACHINE COMPRENANT UN ÉTAGE D'AUBES DE STATOR À CALAGE VARIABLE ETÀ COMMANDE INDÉPENDANTE**
TURBINENMOTOR MIT EINER STUFE MIT VERSTELLLEITSCHAUFELN MIT UNABHÄNGIGER STEUERUNG
TURBINE ENGINE INCLUDING A STAGE OF VARIABLE-PITCH STATOR VANES HAVING INDEPENDENT CONTROL

(30) Priorité: 20.11.2009 FR 0958232
(43) Date de publication de la demande: 26.09.2012
(73) Titulaire: Safran Aircraft Engines, 75015 Paris (FR)
(72) Inventeur: BOURU, Michel, André, F-77950 Montereau Sur Le Jard (FR); KETTLER, Daniel, Germain, Alexis, F-77590 Chartrettes (FR)
(74) Mandataire: Cabinet Beau de Loménie
(86) Numéro de dépôt international: PCT/FR2010/052453
(87) Numéro de publication internationale: WO 2011/061450

(56) Documents cités:
- DE-A1- 102008 002 867
- FR-A1- 2 881 190
- US-A- 3 861 822
- US-A- 4 275 560
- US-A1- 2009 116 954
- US-A1- 2009 238 681

## Description

L'invention se rapporte à une turbomachine comprenant un carter abritant au moins un étage statorique muni d'aubes à calage variable commandé par une couronne d'actionnement entourant coaxialement ledit carter et reliée par des biellettes auxdites aubes à calage variable. Elle concerne plus particulièrement la commande individualisée d'une telle couronne d'actionnement. L'invention s'applique notamment au domaine des réacteurs d'avions et plus particulièrement à un compresseur que comporte un tel réacteur.

Dans une turbomachine du genre spécifié ci-dessus, un stator de compresseur est équipé d'au moins un étage d'aubes de redresseur, à calage variable, dont l'orientation dans la veine est ajustable. Ainsi, l'angle d'attaque des aubes peut être contrôlé en fonction des conditions de fonctionnement de l'avion, par un système d'asservissement qui commande le déplacement de ladite couronne.

Sur les avions, les lois de variation des aubes à calage variable deviennent de plus en plus complexes, au point qu'il est de plus en plus souhaitable de pouvoir commander les aubes à calage variable, étage par étage. De ce fait, un actionnement par vérin commun associé à une cinématique de transmission complexe, coûteuse, encombrante et pesante est de moins en moins souhaitable.

Le document EP 527 593 décrit une structure de moteur électrique linéaire adapté à la manoeuvre d'une couronne d'actionnement. Le système décrit fait appel à des éléments d'induction électrique situés radialement à l'extérieur de la couronne d'actionnement. Ces éléments d'induction sont volumineux et difficiles à intégrer dans l'espace disponible à l'intérieur du carter. De plus, la couronne d'actionnement n'est pas centrée de façon satisfaisante, surtout si l'on considère de possibles variations de diamètres (dues à l'élévation de température) entre la couronne et le carter qui la supporte.

L'invention permet de résoudre tous ces problèmes.

Plus particulièrement, l'invention concerne une turbomachine comprenant un carter abritant au moins un étage statorique muni d'aubes à calage variable commandées par une couronne d'actionnement entourant coaxialement ledit carter, assujettie à se déplacer selon une simple rotation centrée sur un axe dudit carter et reliée par des biellettes auxdites aubes à calage variable, ladite couronne d'actionnement est couplée à au moins une unité motrice spécifique adjacente, en forme générale de vérin, comprenant deux parties formant un corps et une tige, l'une des parties est articulée audit carter et l'autre partie est articulée à une extension latérale de ladite couronne, comme par exemple décrit dans le document US 4 275 560 A.

Selon l'invention la tige est articulée à la couronne et le corps est articulé au dit carter, et l'articulation entre le corps et le carter est agencée au voisinage de l'extrémité du corps à partir de laquelle s'étend la tige.

Par "unité motrice spécifique" on entend que chaque couronne d'actionnement est bien manoeuvrée indépendamment des autres si la turbomachine comporte plusieurs étages de stator équipés d'aubes à calage variable, ce qui est généralement le cas. Ce type de commande implique donc au moins une et de préférence deux unités motrices pour chaque couronne. Une telle unité motrice est compacte et placée au plus près de la couronne d'actionnement, ce qui simplifie et allège le système grâce à une liaison articulée directe entre la couronne et l'unité motrice. Il est plus facile de répartir autour du carter une pluralité d'unités motrices ayant chacune une puissance moyenne suffisante pour l'actionnement d'une seule couronne plutôt qu'une seule unité motrice de forte puissance et donc d'encombrement radial et de poids importants, reliée par un mécanisme compliqué aux différentes couronnes. En outre, comme mentionné plus haut, le fait de pouvoir manoeuvrer chaque couronne d'actionnement (donc chaque étage d'aubes à calage variable) indépendamment des autres est en soi avantageux pour une bonne maîtrise des conditions de fonctionnement du turboréacteur.

De façon simple et avantageuse, l'axe d'extension de la tige de l'unité motrice formant vérin se situe dans un plan parallèle à un plan médian de ladite couronne d'actionnement. Par exemple, la tige est articulée à la couronne et le corps est articulé au carter.

De façon simple, ladite extension latérale comporte une chape et une extrémité de la tige est articulée à cette chape selon un axe parallèle à l'axe du carter.

De préférence, le corps comporte une patte latérale articulée à une chape solidaire dudit carter. Cependant, l'agencement inverse est également possible.

Selon une caractéristique très avantageuse, l'actionneur est du type moteur électrique à déplacement linéaire. Le choix peut se porter sur des moteurs linéaires de type sans contact développés, par exemple, par la société "Copley Controls Corp". A titre d'exemple, un moteur référencé XTB3810 pourra être utilisé. Il bénéficie d'un encombrement réduit avec un corps de 122 mm de longueur pour une course de 75 mm environ.

De préférence, la ou chaque couronne d'actionnement est couplée à deux unités motrices spécifiques adjacentes précitées, sensiblement diamétralement opposées.

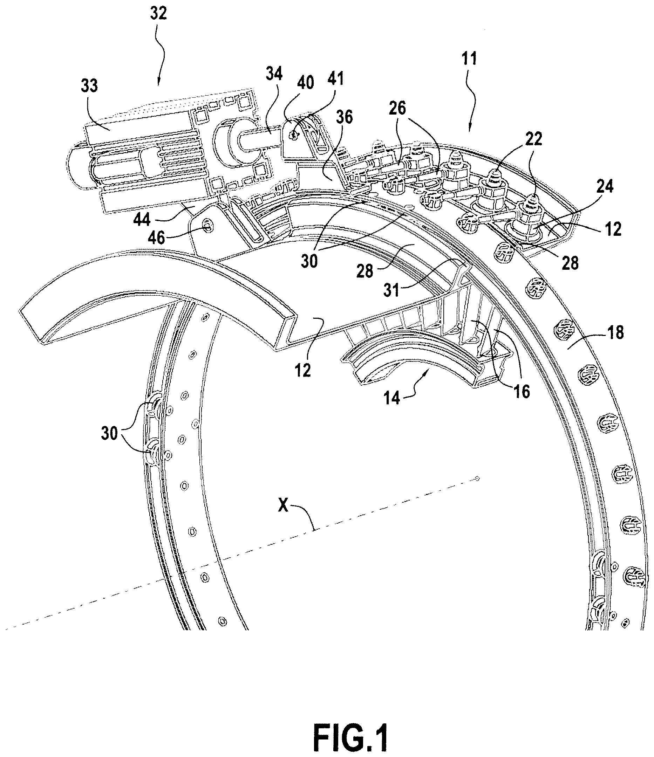

L'invention sera mieux comprise et d'autres avantages de celle-ci apparaîtront plus clairement à la lumière de la description qui va suivre d'une turbomachine conforme à son principe, donnée uniquement à titre d'exemple et faite en référence aux dessins annexés, dans lesquels :
- La figure unique représente partiellement et en perspective une turbomachine équipée d'un système de commande d'aubes à calage variable selon l'invention.

En se reportant au dessin, on a représenté partiellement une turbomachine 11 et plus particulièrement le carter 12 de celle-ci abritant au moins une roue de rotor (non représentée) et au moins un étage statorique 14 comprenant une couronne d'aubes à calage variable 16. Ces aubes sont commandées par une couronne d'actionnement 18 entourant coaxialement le carter 12. En fait, si la turbomachine est un compresseur, le carter abrite plusieurs étages de compression comprenant chacun une roue de rotor et un étage statorique 14 tel que représenté. Au moins un et de préférence plusieurs étages statoriques sont, selon l'invention, commandés indépendamment les uns des autres. Pour ce faire, les aubes à calage variable d'un même étage statorique sont munies de pivots 22 traversant des paliers lisses 24 définis radialement dans la paroi du carter 12. Chacun de ces pivots est relié de façon articulée par une biellette 26 à une même couronne d'actionnement 18 entourant coaxialement le carter. Cette couronne est assujettie à se déplacer selon une simple rotation centrée sur l'axe X du carter. Pour ce faire, le carter comporte des tronçons de rail de guidage 28 s'étendant annulairement de part et d'autre des bords de la couronne 18. Cette dernière porte des galets à gorge 30 en prise avec des nervures latérales 31 du rail. L'agencement décrit ci-dessus est connu.

Selon des caractéristiques importantes de l'invention, la couronne d'actionnement 18 est couplée à au moins une unité motrice spécifique 32 adjacente, en forme générale de vérin, comprenant deux parties formant un corps 33 et une tige 34. L'une des parties est articulée au carter 12 et l'autre partie est articulée à une extension latérale 36 de ladite couronne. L'agencement tel que défini ci-dessus est suffisant pour entraîner la couronne 18 en rotation et par conséquent pour modifier l'orientation des aubes fixes 16 de l'étage statorique. Cependant, pour des questions d'équilibrage et aussi pour utiliser des unités motrices moins encombrantes, la ou chaque couronne d'actionnement peut avantageusement être couplée à deux unités motrices spécifiques adjacentes précitées, sensiblement diamétralement opposées. Par exemple, la couronne d'actionnement 18 telle que représentée peut être munie de deux extensions latérales 36 diamétralement opposées et dans ce cas, le carter porte deux unités motrices agencées de façon à conjuguer leurs efforts pour entraîner la couronne 18 en rotation dans un sens ou dans l'autre.

L'actionneur 32 en forme générale de vérin est avantageusement du type moteur électrique à déplacement linéaire comme défini plus haut. L'axe d'extension de la tige 34 de ladite unité motrice formant vérin se situe dans un plan parallèle à un plan médian de la couronne d'actionnement 18. Selon l'exemple représenté, la tige 34 est articulée à la couronne 18 et le corps 33 est articulé au carter 13.

Plus précisément, l'extension latérale 36 comporte une chape 40 et l'extrémité de la tige comporte une partie plate formant tête de biellette, percée, par laquelle elle est articulée à cette chape selon un axe 41 parallèle à l'axe X du carter. Par ailleurs, le corps 33 comporte une patte latérale 44 articulée à une chape 46 solidaire du carter. Selon l'invention l'articulation entre le corps 33 et le carter 12 est agencée au voisinage de l'extrémité du corps à partir de laquelle s'étend la tige 34. Autrement dit, la patte latérale 44 s'étend près de l'extrémité du corps 33 d'où émerge la tige 34.

Avantageusement, l'articulation entre le corps et le carter (éléments 46, 44) se situe sensiblement au milieu de l'actionneur 32 lorsque la tige est déployée au maximum de sa course. Ce montage assure un débattement angulaire minimum de l'actionneur 32 pendant la course de la couronne d'actionnement, ce qui permet de loger l'actionneur dans un espace relativement restreint autour du carter.

## Revendications

1. Turbomachine comprenant un carter (12) abritant au moins un étage statorique muni d'aubes à calage variable (16) commandées par une couronne d'actionnement (18) entourant coaxialement ledit carter, assujettie à se déplacer selon une simple rotation centrée sur un axe (X) dudit carter et reliée par des biellettes (26) auxdites aubes à calage variable, dans laquelle ladite couronne d'actionnement (18) est couplée à au moins une unité motrice spécifique (32) adjacente, en forme générale de vérin, comprenant deux parties formant un corps (33) et une tige (34),
**caractérisée en ce que** ladite tige (34) est articulée à une extension latérale de la couronne (18) et ledit corps (33) est articulé audit carter (12), et
**en ce que** l'articulation (44, 46) entre le corps et le carter est agencée au voisinage de l'extrémité du corps à partir de laquelle s'étend la tige.

2. Turbomachine selon la revendication 1, **caractérisée en ce que** l'axe d'extension de la tige (34) de l'unité motrice formant vérin se situe dans un plan parallèle à un plan médian de ladite couronne d'actionnement.

3. Turbomachine selon la revendication 1 ou 2, **caractérisée en ce que** ladite articulation se situe sensiblement au milieu dudit actionneur (32) lorsque ladite tige est déployée au maximum de sa course.

4. Turbomachine selon l'une des revendications 1 à 3, **caractérisée en ce que** ladite extension latérale comporte une chape (40) et **en ce que** l'extrémité de ladite tige (34) est articulée à cette chape selon un axe (41) parallèle à l'axe dudit carter.

5. Turbomachine selon l'une des revendications 1 à 4, **caractérisée en ce que** ledit corps (33) comporte une patte latérale (44) articulée à une chape (46) solidaire dudit carter.

6. Turbomachine selon l'une des revendications précédentes, **caractérisée en ce que** ledit actionneur (32) est du type moteur électrique à déplacement linéaire.

7. Turbomachine selon l'une des revendications précédentes, **caractérisée en ce que** la ou chaque couronne d'actionnement (18) est couplée à deux unités motrices (32) spécifiques adjacentes précitées, sensiblement diamétralement opposées.

## Patentansprüche

1. Turbomaschine, umfassend ein Gehäuse (12), das mindestens eine Statorstufe beherbergt, die mit verstellbaren Leitschaufeln (16) versehen ist, die durch einen Betätigungsring (18) gesteuert werden, der das Gehäuse koaxial umgibt, einer Bewegung gemäß einer auf einer Achse (X) des Gehäuses zentrierten einfachen Drehung unterworfen ist und durch Verbindungsstangen (26) mit den verstellbaren Leitschaufeln verbunden ist, wobei der Betätigungsring (18) mit mindestens einer benachbarten spezifischen Antriebseinheit (32), in allgemeiner Form eines Zylinders, gekoppelt ist, die zwei Teile umfasst, die einen Körper (33) und eine Stange (34) bilden,
**dadurch gekennzeichnet, dass** die Stange (34) an einer seitlichen Erweiterung dem des Rings (18) angelenkt ist und der Körper (33) an dem Gehäuse (12) angelenkt ist und
dass das Gelenk (44, 46) zwischen dem Körper und dem Gehäuse in der Nähe des Endes des Körpers vorgesehen ist, von dem aus sich die Stange erstreckt.

2. Turbomaschine gemäß Anspruch 1, **dadurch gekennzeichnet, dass** die Verlängerungsachse der Stange (34) der einen Zylinder bildenden Antriebseinheit sich in einer zu einer Mittelebene des Betätigungsrings parallelen Ebene befindet.

3. Turbomaschine gemäß Anspruch 1 oder 2, **dadurch gekennzeichnet, dass** sich das Gelenk im Wesentlichen in der Mitte des Antriebs (32) befindet, wenn die Stange bis zu ihrem maximalen Hub ausgefahren ist.

4. Turbomaschine gemäß einem der Ansprüche 1 bis 3, **dadurch gekennzeichnet, dass** die seitliche Verlängerung einen Gabelkopf (40) aufweist und dass das Ende des Stabes (34) an diesem Gabelkopf entlang einer Achse (41) parallel zur Achse des Gehäuses angelenkt ist.

5. Turbomaschine gemäß einem der Ansprüche 1 bis 4, **dadurch gekennzeichnet, dass** der Körper (33) eine seitliche Lasche (44) aufweist, die an einem mit dem Gehäuse verbundenen Gabelkopf (46) angelenkt ist.

6. Turbomaschine gemäß einem der vorangehenden Ansprüche, **dadurch gekennzeichnet, dass** der Antrieb (32) vom Typ eines Elektromotors mit linearer Verschiebung ist.

7. Turbomaschine gemäß einem der vorangehenden Ansprüche, **dadurch gekennzeichnet, dass** der oder jeder Betätigungsring (18) mit zwei benachbarten, im Wesentlichen diametral gegenüberliegenden spezifischen Antriebseinheiten (32) gekoppelt ist.

## Claims

1. A turbine engine comprising a casing (12) housing at least one stator stage having variable-pitch vanes (16) controlled by an actuator ring (18) coaxially surrounding said casing, the ring being constrained to move in turning only about an axis (X) of said casing and being connected by crank-arms (26) to said variable-pitch vanes, wherein said actuator ring (18) is coupled to at least one adjacent specific drive unit (32) generally in the form of an actuator and comprising two portions forming a body (33) and a rod (34),
**characterized in that** said rod (34) is hinged to a lateral extension of the ring (18) and said body (33) is hinged to said casing (12), and
**in that** the hinge (44, 46) between the body and the casing is arranged in the vicinity of the end of the body from which the rod extends.

2. A turbine engine according to claim 1, **characterized in that** the axis of extension of the rod (34) of the actuator-forming drive unit extends in a plane parallel to a midplane of said actuator ring.

3. A turbine engine according to claim 1 or 2, **characterized in that** said hinge is situated substantially in the middle of said actuator (32) when said rod is deployed to its maximum stroke.

4. A turbine engine according to one of claims 1 to 3, **characterized in that** said lateral extension includes a fork (40), and **in that** the end of said rod (34) is hinged to said fork about an axis (41) parallel to the axis of said casing.

5. A turbine engine according to one of claims 1 to 4, **characterized in that** said body (33) includes a lateral tab (44) hinged to a fork (46) secured to said casing.

6. A turbine engine according to one of the preceding claims, **characterized in that** said actuator (32) is of the linear motion electric motor type.

7. A turbine engine according to one of preceding claims, **characterized in that** the or each actuator ring (18) is coupled to two above-mentioned adjacent specific drive units (32) that are substantially diametrically opposite.
